# Europäisches Patentamt

# European Patent Office

# Office européen des brevets

(11) Veröffentlichungsnummer: **0 075 971**
**B1**

## EUROPÄISCHE PATENTSCHRIFT

(45) Veröffentlichungstag der Patentschrift:
14.10.87

(21) Anmeldenummer: **82201017.9**

(22) Anmeldetag: **13.08.82**

(51) Int. Cl.⁴: **C 22 B 7/04**, C 22 B 7/00,
C 22 B 21/00

(54) Verfahren zur Aufbereitung von Aluminiumschmelzschlacken.

(30) Priorität: **24.09.81 DE 3137950**

(43) Veröffentlichungstag der Anmeldung:
**06.04.83 Patentblatt 83/14**

(45) Bekanntmachung des Hinweises auf die Patenterteilung:
**14.10.87 Patentblatt 87/42**

(84) Benannte Vertragsstaaten:
**AT BE CH DE FR GB IT LI NL**

(56) Entgegenhaltungen:
**DE-A-1 533 104**
**DE-B-2 853 256**
**DE-C-866 096**
**FR-A-2 390 507**
**FR-A-2 406 466**
**FR-A-2 410 507**
**GB-A-784 884**
**US-A-3 770 424**

(73) Patentinhaber: **METALLGESELLSCHAFT AG,
Reuterweg 14 Postfach 3724, D-6000 Frankfurt/M.1
(DE)**
Patentinhaber: **URAPHOS CHEMIE GmbH,
Ollenhauerstrasse 100, D-1000 Berlin 51 (DE)**

(72) Erfinder: **Köbele, Klaus, Hauptstrasse 8, D-6057
Dietzenbach 2 (DE)**
Erfinder: **Götz, Gerhard, Rönskenstrasse 42, D-4223
Voerde (DE)**
Erfinder: **Beckmann, Manfred, Jean- Philippe-
Anlage 17, D-6078 Neu- Isenburg (DE)**
Erfinder: **Rode, Ernst, Römerberg 13, D-6000
Frankfurt am Main (DE)**
Erfinder: **Berger, Friedrich, Mühlstrasse 32, D-6451
Neuberg II (DE)**

(74) Vertreter: **Fischer, Ernst, Dr., Reuterweg 14, D-6000
Frankfurt am Main 1 (DE)**

## Beschreibung

Die Erfindung betrifft ein Verfahren zur Aufbereitung von Aluminiumschmelzschlacke aus der Aluminium-Sekundär-Industrie durch Brechen der Schlacke, Abtrennen des metallischen Aluminiums vom Schlackeanteil durch Sieben, Behandeln des Schlackeanteils mit Wasser und Aufarbeiten der resultierenden wäßrigen Lösung.

In der US-A-3 770 424 wird zum Stand der Technik auch die Aufarbeitung von Krätzen aus der Primärgewinnung von Aluminium beschrieben, wobei in mehreren Verfahrensstufen zerkleinert, gesiebt und gesichtet wird.

Ferner ist bekannt, Metallhüttenschlacken mit in Wasser löslichen Anteilen dadurch aufzuarbeiten, daß die Schlacke zu knolligem Haufwerk zerkleinert, dann wenigstens einem Waschvorgang zum Entzug von Salzanteil unterzogen sowie die entstehende Salztrübe in einem Dekantierbecken nachbehandelt und eine diesem entnommene Salzlösung in einen Verdampfungsprozeß eingeleitet wird (DE-A-27 46 860).

Der Erfindung liegt die Aufgabe zugrunde, das Verfahren auf wirtschaftliche Weise kontinuierlich durchzuführen. Die Aluminiumausbeute soll bei großer Reinheit des Metalls hoch sein und die Umwelt soll, insbesondere beim Lösevorgang der Schlacke, nicht belastet werden. Diese Aufgabe wird durch die Verfahrensmaßnahmen gelöst, die im Kennzeichen des Patentanspruchs 1 genannt sind.

Die mit der Erfindung erzielten Vorteile bestehen insbesondere darin, daß es nach einem einfachen und wirtschaftlichen Verfahren gelingt, metallisches Aluminium aus Aluminiumschmelzschlacken aus der Aluminium-Sekundär-Industrie zurückzugewinnen. Das Verfahren arbeitet kontinuierlich. Durch die vier hintereinandergeschalteten Zerkleinerungsstufen wird diese Schlacke so gebrochen, daß bei der Zerkleinerung keine toxischen Gase entstehen und das metallische Aluminium nicht zerkleinert, sondern nur teilweise verformt und in jeder Stufe abgetrennt wird. Da der Feinanteil der Schlacke ebenfalls in jeder Stufe abgetrennt wird, werden die nachgeschalteten Zerkleinerungsstufen nicht belastet. Verstopfungen treten nicht ein.

Das metallische Aluminium fällt trocken an und die einzelnen Teilchen haben Durchmesser von mindestens 0,5 mm. Das Metall kann unmittelbar, beispielsweise in Trommelschmelzöfen, verarbeitet werden. Aus dem Feinanteil der Schlacke werden die wasserlöslichen Bestandteile kontinuierlich herausgelöst, wobei die Verweilzeiten nur sehr kurz sind. Die entstehenden, teilweise toxischen Gase können leicht beherrscht und durch nachfolgende Wäscher unschädlich gemacht werden. Zur Entfernung von $NH_3$ und anderen alkalischen Gasbestandteilen hat sich eine Wäsche mit wäßriger Schwefelsäure bewährt. Die restlichen Gasbestandteile, z. B. $H_2S$ und $PH_3$, werden durch Überleiten über Aktivkohle entfernt. Das resultierende Gas ist völlig frei von schädlichen Bestandteilen und kann unmittelbar an die Atmosphäre abgegeben werden. Der so von wasserlöslichen Salzen befreite Rückstand kann problemlos gelagert werden und stellt kein Sondermüllproblem mehr dar. Das Verfahren arbeitet somit umweltfreundlich.

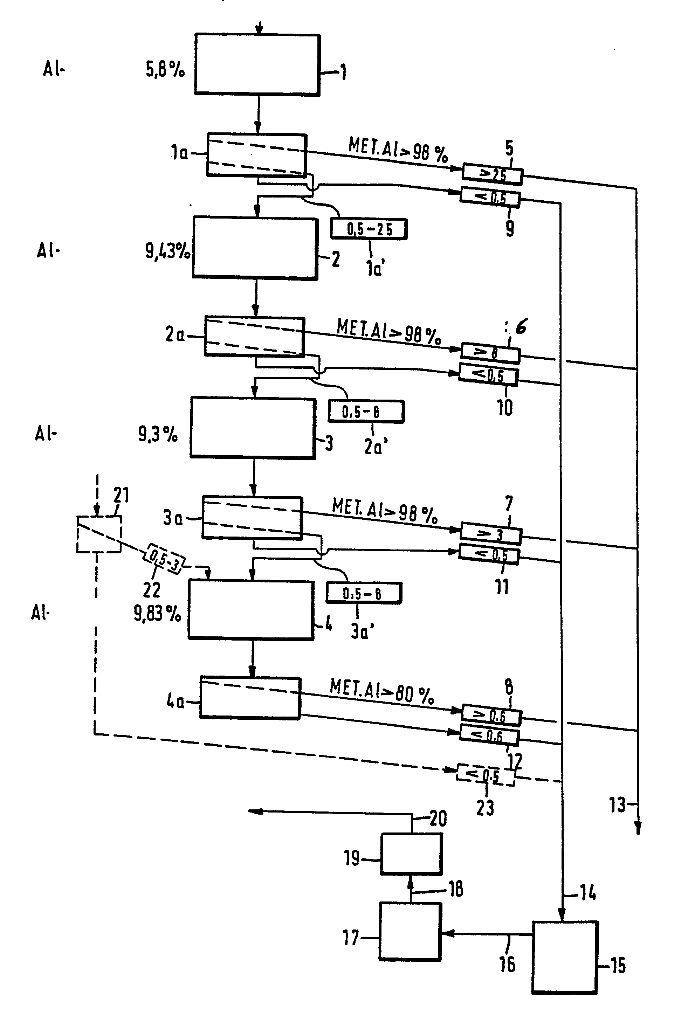

Die Erfindung ist in der Zeichnung beispielsweise und schematisch dargestellt und wird im folgenden Ausführungsbeispiel näher beschrieben.

In der Zeichnung bedeuten:

1 Prall- oder Schlagbrecher;

2 mehrrotoriger Hammerbrecher;

3 erster Feinbrecher, bevorzugt ein Walzenbrecher;

4 zweiter Feinbrecher, bevorzugt ein Walzenbrecher;

1a eine dem Brecher 1 nachgeschaltete zweistufige Siebeinrichtung;

2a eine dem Hammerbrecher nachgeschaltete zweistufige Siebeinrichtung;

3a eine dem 1. Feinbrecher nachgeschaltete zweistufige Siebeinrichtung;

4a eine dem 2. Feinbrecher nachgeschaltete einstufige Siebeinrichtung;

5 erste Siebung und Abtrennung von metallischem Aluminium mit Korngrößen über 25 mm;

6 zweite Siebung und Abtrennung von metallischem Aluminium mit Korngrößen über 8 mm;

7 dritte Siebung und Abtrennung von metallischem Aluminium mit Korngrößen über 3 mm;

8 vierte Siebung und Abtrennung von metallischem Aluminium mit Korngrößen über 0,6 mm;

9 erste Siebung und Abtrennung der Schlacke mit Korngrößen unter 0,5 mm;

10 zweite Siebung und Abtrennung der Schlacke mit Korngrößen unter 0,5 mm;

11 dritte Siebung und Abtrennung der Schlacke mit Korngrößen unter 0,5 mm;

12 vierte Siebung und Abtrennung der Schlacke mit Korngrößen unter 0,6 mm (hierbei sind die Siebstufen in den Siebeinrichtungen durch die gestrichelten Linien verdeutlicht, und es sind die Grenzwerte der aus dem Zerkleinerungsprozeß abgetrennten Siebfraktionen 5 - 12 in Kästchen in den Ableitungen vermerkt).

1a' Zwischenfraktion der Siebungen 5 und 9;

2a' Zwischenfraktion der Siebungen 6 und 10;

3a' Zwischenfraktion der Siebungen 7 und 11 (hierbei sind die Grenzwerte der Zwischenfraktionen in Kästchen aufgeführt, die den jeweiligen Verbindungsleitungen zwischen Siebeinrichtung und nachgeschaltetem Brecher zum weiteren Zerkleinern der Zwischenfraktion zugeordnet sind);

13 Abzug metallisches Aluminium;

14 Abzug Schlacke;

15 Lösebehälter zum Herauslösen der wasserlöslichen Bestandteile aus der Schlacke;

16 Gasleitung zum Abführen von Gasen aus dem Lösebehälter;

17 Wäscher für das aus dem Lösebehälter abgeführte Gas;

18 Abzug Restgas aus Wäscher 17

19 Kohleadsorptionsanlage;

20 Ableitung Reingas;

21 einstufige Siebeinrichtung für zugeführten Kugelmühlenstaub;

22 Siebung und Abtrennung von Kugelmühlenstaubteilchen zwischen 0,5 und 3 mm und Zuführung zum zweiten Feinbrecher 4;

23 Siebung und Abtrennung von Kugelmühlenstaub mit Korngrößen unter 0,5 mm (die Siebfraktionen 22 und 23 sind hier in vergleichbarer Weise wie bei den anderen Siebeinrichtungen 1a bis 4a in der Figur verdeutlicht).

**Ausführungsbeispiel**

40 000 kg/h Aluminiumschmelzschlacke aus der Aluminium-Sekundär-Industrie werden in einem Prall- oder Schlagbrecher 1 zerkleinert und mittels einer ersten Siebung werden 600 kg/h metallisches Aluminium mit einer Korngröße von über 25 mm und mit einer Reinbeit von über 98 % bei 5 abgetrennt und über 13 abgezogen. Gleichzeitig werden bei 9 26 997 kg/h Schlacke mit Korngrößen unter 0,5 mm durch Sieben abgetrennt und über Leitung 14 abgeführt. Das verbleibende Gut (Zwischenfraktion 1a') in einer Menge von 12 403 kg/h wird in einen mehrrotorigen Hammerbrecher 2 überführt und weiter zerkleinert. Durch Siebe 6 werden 403 kg/h metallisches Aluminium mit einer Korngröße von über 8 mm und einer Reinheit von über 98 % abgetrennt und über 13 abgezogen. Gleichzeitig wird durch 10 Schlacke in einer Menge von 4 500 kg/h und mit einer Korngröße von unter 0,5 mm über 14 abgezogen. Das restliche Gut (Zwischenfraktion 2a') in einer Menge von 7 500 kg/h wird in den ersten Feinbrecher, bevorzugt einen Walzenbrecher, 3 überführt. Durch 7 werden 390 kg/h metallisches Aluminium mit einer Korngröße über 3 mm abgetrennt und über 13 abgeführt. Durch eine dritte Siebung 11 werden gleichzeitig 4 832 kg/h Schlacke mit einer Korngröße unter 0,5 mm abgetrennt und über 14 abgeführt. Das verbleibende Gut (Zwischenfraktion 3a') in einer Menge von 2 278 kg/h wird schließlich in den zweiten Feinbrecher, bevorzugt einen Walzenbrecher, 4 eingebracht und durch 8 werden 158 kg/h metallisches Aluminium mit einer Korngröße von über 0,6 mm und einer Reinheit von über 80 % abgetrennt und über 13 abgezogen. Gleichzeitig werden durch Sieben bei 12 2 120 kg/h Schlacke mit einer Korngröße von unter 0,6 mm abgetrennt und über 14 abgeführt.

Insgesamt werden über 13 1 551 kg/h metallisches Aluminium erhalten.

Die über 14 abgezogene Schlacke in einer Menge von 38 449 kg/h wird kontinuierlich einem Lösebehälter 15 zugeführt und die wasserlöslichen Bestandteile während einer Verweildauer von 3 h entfernt. Die beim Lösevorgang entstehenden Gase werden über eine Gasleitung 16 abgezogen und in einen Wäscher 17 geleitet, wo sie im Gegenstrom mit einer 2-%igen wäßrigen Schwefelsäurelösung gewaschen werden. Das den Wäscher 17 verlassende Gas wird über 18 in eine Kohleadsorptionsanlage 19 geleitet und von restlichen Gasbestandteilen befreit. Das bei 20 austretende Reingas ist frei von schädlichen Bestandteilen und kann in die Atmosphäre abgelassen werden.

In der Figur ist in gestrichelter Zeichnungsweise berücksichtigt worden, daß in dem erfindungsgemäßen Verfahrensablauf in vorteilhafter Weise Kugelmühlenstaub eingebracht und zu metallischem Aluminium und Schlacke aufbereitet werden kann. Der beispielsweise in einer Korngrößenverteilung zwischen 0 und 3 mm vorliegende Kugelmühlenstaub wird zunächst in einer einstufigen Siebeinrichtung 21 vorgesiebt. Als Fraktion 22 wird der Kugelmühlenstaub mit einer Korngröße von 0,5 bis 3 mm abgetrennt und danach in den Feinbrecher 4 eingebracht, während der Kugelmühlenstaub mit einer Korngröße unter 0,5 mm über die Leitung 14 abgezogen wird (Fraktion 23).

Während bei der beschriebenen Verfahrensweise die Zwischenfraktion 2a' mit Korngrößen zwischen 0,5 mm und 8 mm vollständig dem ersten Feinbrecher 3 zugeleitet wird, kann es unter Umständen zweckmäßig sein, die zweistufige Siebeinrichtung 2a durch eine dreistufige Siebeinrichtung zu ersetzen, die das ihr zugeführte Gut in vier Fraktionen kleiner 0,5 mm, 0,5 bis 3 mm, 3 bis 8 mm und größer 8 mm absiebt. Von diesen Fraktionen wird dann dem ersten Feinbrecher 3 nur noch die Fraktion 3 bis 8 mm zugeleitet, während die Fraktion 0,5 bis 3 mm unter Umgehung des ersten Feinbrechers und der Siebeinrichtung 3a direkt dem zweiten Feinbrecher 4 aufgegeben werden kann.

**Patentansprüche**

1. Verfahren zur Aufbereitung von Aluminiumschmelzschlacke aus der Aluminium-Sekundär-Industrie durch Brechen der Schlacke, Abtrennen des metallischen Aluminiums vom Schlackenanteil durch Sieben, Behandeln des Schlackenanteils mit Wasser und Aufarbeiten der resultierenden wäßrigen Lösung, mit folgenden Verfahrensstufen:

(a) die Aluminiumschmelzschlacke wird in einem Prallbrecher zerkleinert, die zerkleinerte Schmelzschlacke wird zweistufig gesiebt, wobei eine erste Aluminiumfraktion mit Korngrößen von über 25 mm und einem Gehalt an metallischem Aluminium von über 98 %, eine erste schlackereiche Feinkornfraktion mit Korngrößen von unter 0,5 mm und eine Zwischenfraktion mit Korngrößen von 0,5 bis 25 mm entstehen,

(b) die Zwischenfraktion aus Stufe (a) wird in einem Prallbrecher oder Hammerbrecher zerkleinert und die zerkleinerte Fraktion wird mindestens zweistufig gesiebt, wobei eine zweite Aluminiumfraktion mit Korngrößen von über 3 mm und einem Gehalt an metallischem Aluminium von über 98 %, eine zweite schlackereiche Feinkornfraktion mit Korngrößen von unter 0,5 mm und mindestens eine Zwischenfraktion mit Korngrößen von höchstens 8 mm entstehen,

(c) die Zwischenfraktion aus Stufe (b) wird in einem ersten Feinbrecher zerkleinert und die zerkleinerte Fraktion wird zweistufig gesiebt, wobei eine dritte Aluminiumfraktion mit Korngrößen von über 3 mm und einem Gehalt an metallischem Aluminium von über 98 %, eine dritte schlackereiche Feinkornfraktion mit Korngrößen von unter 0,5 mm und eine Zwischenfraktion mit Korngrößen von 0,5 bis 3 mm entstehen,

(d) die Zwischenfraktion aus Stufe (c) wird in einem zweiten Feinbrecher zerkleinert und die zerkleinerte Fraktion wird gesiebt, wobei eine dritte Aluminiumfraktion mit Korngrößen von über 0,6 mm und eine schlackereiche Feinkornfraktion entstehen,

(e) Die schlackereichen Feinkornfraktionen der Stufen (a) bis (d) werden in Wasser gelöst und die resultierende wäßrige Lösung wird filtriert und eingedampft.

2. Verfahren nach Anspruch 1, dadurch gekennzeichnet, daß man als Feinbrecher in den Stufen (b) und (c) Walzenbrecher verwendet.

3. Verfahren nach Anspruch 1, dadurch gekennzeichnet, daß man in der Stufe (b) die zerkleinerte Fraktion dreistufig siebt, wobei die zweite Aluminiumfraktion, die zweite schlackereiche Feinkornfraktion sowie eine erste Zwischenfraktion mit Korngrößen von 3 bis 8 mm und eine zweite Zwischenfraktion mit Korngrößen von 0,5 bis 3 mm entstehen und die erste Zwischenfraktion dem ersten Feinbrecher der Stufe (c) und die zweite Zwischenfraktion dem zweiten Feinbrecher der Stufe (d) zugeführt wird.

4. Verfahren nach Anspruch 1 oder einem der folgenden, dadurch gekennzeichnet, daß man dem Feinbrecher der Stufe (d) Kugelmühlenstaub mit Korngrößen von 0,5 bis 3 mm zuführt.

**Claims**

1. A process of treating a composite consisting of slag and fused aluminium and obtained in secondary aluminium industries, comprising crushing the composite, separating the aluminium metal from the slag by sieving, treating the slag with water and processing the resulting aqueous solution, comprising the following process stages:

(a) the composite consisting of slag and fused aluminium is disintegrated by a rebound crusher, the disintegrated composite consisting of slag and fused aluminium is sieved in two stages to recover a first aluminium fraction having particle sizes in excess of 25 mm and an aluminium metal content above 98 %, a high-slag first finegrained fraction having particle sizes below 0.5 mm and an intermediate fraction having particle sizes from 0.5 to 25 mm,

(b) the intermediate fraction from stage (a) is disintegrated in a rebound crusher or hammer crusher and the disintegrated fraction is sieved in at least two stages to recover a second aluminium fraction having particle sizes in above 8 mm and an aluminium metal content above 98 %, a high-slag second fine-grained fraction having particle sizes below 0.5 mm, and at least one intermediate fraction having particle sizes not in excess of 8 mm.

(c) the intermediate fraction from stage (b) is disintegrated in a first fine crusher and the disintegrated traction is sieved in two stages to recover a third aluminium fraction having particle sizes above 3 mm and an aluminium metalcontent above 98 %, a high-slag third fine-grained fraction having particle sizes below 0.5 mm, and an intermediate fraction having particle sizes from 0.5 to 3 mm,

(d) the intermediate fraction from stage (c) is disintegrated in a second fine crusher and the disintegrated fraction is sieved to recover a third aluminium fraction having particle sizes above 0.6 mm and a high-slag fine-grained fraction,

(e) the high-slag fine-grained fractions from stages (d) are dissolved in water and the resulting aqueous solution is filtered and evaporated.

2. A process according to claim 1, characterized in that roll crushers are used as fine crushers in stages (b) and (c).

3. A process according to claim 1, characterized in that in stage (b) the disintegrated fraction is sieved in three stages to recover the second aluminium fraction, the high-slag second fine-grained fraction, a first intermediate fraction having particle sizes from 3 to 8 mm, and a second intermediate fraction having particle sizes from 0.5 to 3 mm, the first intermediate fraction is fed to the first fine crusher used in stage (c) and the second intermediate fraction is fed to the second fine crusher used in stage (d).

4. A process according to claim 1 or any of the following claims, characterized in that ball mill dust having particle sizes from 0.5 to 3 mm is fed to the fine crusher used in stage (d).

**Revendications**

1. Procédé de préparation de scories aluminifères provenant de l'industrie de l'aluminium secondaire par broyage des scories, séparation de l'aluminium métallique de la fraction des scories par tamisage, traitement des scories à l'eau et retraitement de la solution aqueuse obtenue, caractérisé par les étapes de traitement suivantes:

(a) les scories aluminifères sont broyées dans un broyeur à percussion, les scories broyées sont tamisées en deux etages, tandis qu'une première fraction d'aluminium ayant une granulométrie supérieure à 25 mm et une teneur en aluminium métallique supérieure à 98 %, est obtenue ainsi qu'une première fraction de scories à granulométrie fine ayant une granulométrie inférieure à 0,5 mm et une fraction intermédiaire ayant une granulométrie de 0,5 à 25 mm,

(b) la fraction intermédiaire provenant de l'étage (a) est broyé dans un broyeur à percussion ou un broyeur à marteauxet la fraction broyée est tamisée suivant une opération à au moins deux étages, tandis qu'une seconde fraction d'aluminium, ayant une granulométrie supérieure à 8 mm et une teneur en aluminium métallique supérieure à 98 % est obtenue, ainsi qu'une seconde fraction de scories à granulométrie fine, ayant une granulométrie inférieure à 0,5 mm et au moins une fraction intermédiaire ayant une granulométrie non supérieure à 8 mm,

(c) la fraction intermédiaire provenant de l'étage (b) est broyée dans un premier broyeur fin et la fraction broyée est tamisée en deux étages, tandis qu'une troisième fraction d'aluminium ayant une granulométrie supérieure à 3 mm et une teneur en aluminium métallique supérieure à 98 % est obtenue, ainsi qu'une troisième fraction de scories à granulométrie fine ayant une granulométrie inférieure à 0,5 mm et une fraction intermédiaire ayant une granulométrie de 0,5 à 3 mm,

(d) la fraction intermédiaire provenant de l'étage (c) est broyée dans un second broyeur fin, et la fraction broyée est tamisée, tandis que l'on obtient une troisième fraction d'aluminium ayant une granulométrie supérieure à 0,6 mm ainsi qu'une fraction à granulométrie fine riche en scories,

(e) Les fractions riches en scories et à granulométrie fine provenant des étages (a) à (d) sont dissoutes dans l'eau et la solution aqueuse résultante est filtrée et concentrée par vaporisation.

2. Procédé selon la revendication 1, caractérisé en ce que l'on utilise comme broyeur fin pour les étages (b) et (c) des broyeurs à cylindres.

3. Procédé selon la revendication 1, caractérisé en ce que l'on tamise à l'étage (b) la fraction broyée en trois étages, tandis que la seconde fraction d'aluminium, la seconde fraction riche en scories et à granulométrie fine ainsi qu'une première fraction intermédiaire ayant une granulométrie comprise entre 3 et 8 mm et une seconde fraction intermédiaire ayant une granulométrie comprise entre 0,5 et 3 mm sont obtenues et que la première fraction intermédiaire est amenée au premier broyeur fin de l'étage (c) et la seconde fraction intermédiaire au second broyeur fin de l'étage (d).

4. Procédé selon la revendication 1 ou l'une des revendications suivantes, caractérisé en ce que l'on amène au broyeur fin de l'étage (d) de la poussière de broyeur à boulets ayant une granulométrie de 0,5 à 3 mm.